Europäisches Patentamt

(19) European Patent Office

Office européen des brevets

(11) Numéro de publication: **0 301 063**
**B1**

(12) **FASCICULE DE BREVET EUROPEEN**

(45) Date de publication du fascicule du brevet: **02.01.91**

(51) Int. Cl.⁵: **G 01 P 13/02,** G 01 D 11/02, F 16 C 39/06

(21) Numéro de dépôt: **88901614.3**

(22) Date de dépôt: **05.02.88**

(86) Numéro de dépót international:
**PCT/FR88/00063**

(87) Numéro de publication internationale:
**WO 88/05916 11.08.88 Gazette 88/18**

(54) **GIROUETTE A PALIER MAGNETIQUE.**

(30) Priorité: **09.02.87 FR 8701522**

(43) Date de publication de la demande:
**01.02.89 Bulletin 89/05**

(45) Mention de la délivrance du brevet:
**02.01.91 Bulletin 91/01**

(84) Etats contractants désignés:
**BE CH DE GB IT LI LU NL**

(56) Documents cités:
**EP-A-0 003 776**
**GB-A-1 163 632**
**US-A-2 611 051**
**US-A-3 691 829**

**Patent Abstracts of Japan,volume 7,No.244**
**(M-252)(1389),28 October 1983 & JP,A,58131426**

(73) Titulaire: **FRANKLIN FRANCE S.A.**
**49, rue de Patay**
**F-75013 Paris (FR)**

(72) Inventeur: **ROUBINET, Michel**
**10, rue Bréa**
**F-75006 Paris (FR)**
Inventeur: **BAUMAN, Jacques**
**7, rue des Grandes-Vallées**
**F-91820 Boutigny-sur-Essonne (FR)**

(74) Mandataire: **Sauvage, Renée**
**Cabinet Sauvage 100 bis, avenue de Saint-Mandé**
**F-75012 Paris (FR)**

EP 0 301 063 B1

## Description

La présente invention a pour objet une girouette du type comprenant une flèche munie d'un empennage et montée rotative autour d'un axe vertical au moyen d'un palier magnétique dont le principe est connu, par exemple d'après la demande de brevet japonaise 58-131426.

A l'heure actuelle, les girouettes utilisent pour leur rotation des billes de verre, des roulements à billes, des dispositifs à galets ou des axes simples.

Ces dispositifs sont, pour les uns, simples mais sans fiabilité, pour les autres, plus techniques mais aussi beaucoup plus onéreux.

La présente invention a pour but de remédier aux inconvénients des dispositifs connus en proposant un moyen de montage en rotation qui soit simple, fiable et éconimique.

Ce but est atteint en ce sens que, dans la girouette selon l'invention, le montage rotatif est réalisée au moyen d'un palier magnétique qui est enfilé sur l'axe vertical et qui se compose d'un bloc inférieur rendu solidaire de l'axe vertical et d'un bloc supérieur susceptible de tourner librement autour dudit axe, la face supérieure du bloc inférieur et la face inférieure du bloc supérieur étant chacune munie d'un aimant permanent, lesquels aimants sont disposés en vis-à-vis et orientés de telle sorte que leurs faces en vis-à-vis sont de même polarité, la flèche étant rendue solidaire du bloc supérieur.

Grâce à cette disposition, les aimants permanents se repoussent en maintenant constamment écarté le bloc supérieur du bloc inférieur. Il s'ensuit que ce bloc supérieur et la flèche qui en dépend peuvent tourner sans friction autour de l'axe vertical.

Dans une forme d'exécution pratique de l'invention, la face supérieure du bloc inférieur présente un premier évidement adapté à accueillir un premier aimant permanent annulaire et la face inférieure du bloc supérieur présente un second évidement en vis-à-vis dudit premier évidement et adapté à accueillir un second aimant permanent annulaire, lesdits premier et second aimants étant disposés de telle sorte, dans leur évidement respectif, que leurs faces en vis-à-vis sont de même polarité.

De préférence, le second évidement offre une profondeur suffisante pour accueillir un ou plusieurs aimants accolés polarité positive contre polarité négative, et/ou une ou plusieurs bagues formant entretoise(s) de réglage.

On peut ainsi doser la force avec laquelle les aimants des blocs supérieur et inférieur se repoussent et, par conséquent, l'écartement entre le bloc supérieur et le bloc inférieur.

Avantageusement, la ou les bagues formant entretoise(s) sont en nylon.

Dans une forme d'exécution pratique, la flèche est en deux parties, rendues chacune solidaire du bloc supérieur.

Le bloc inférieur et le bloc supérieur ont une forme extérieure complémentaire donnant au palier magnétique qu'ils constituent une forme sphérique.

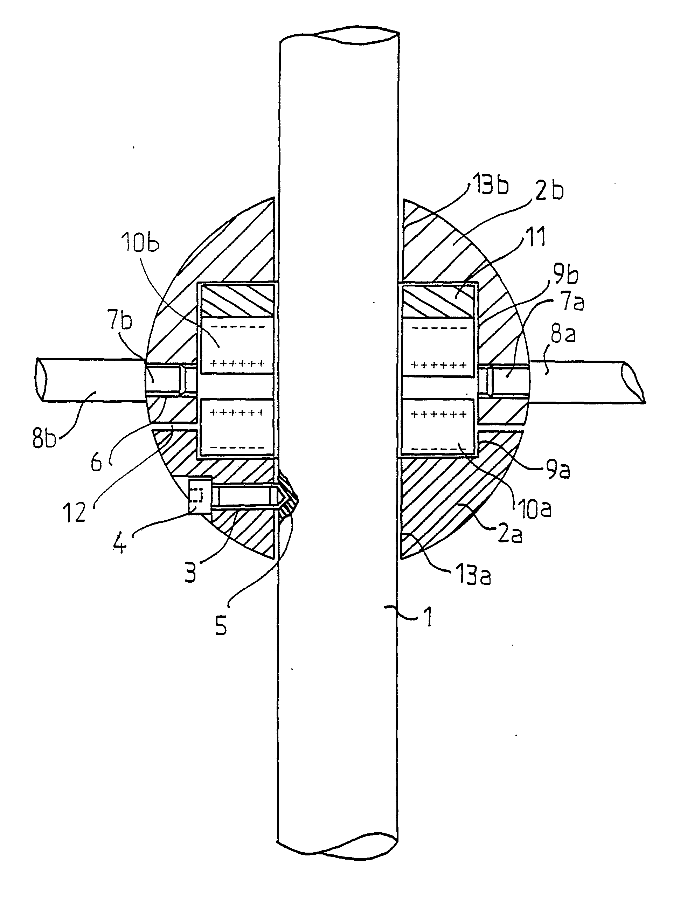

L'invention sera mieux comprise à la lecture de la description ci-après faite en référence à la figure unique du dessin annexé.

Dans cette figure, on voit un axe vertical 1 susceptible d'être fixé, par exemple, au tout d'une habitation.

Sur cet axe 1 est enfilé un bloc inférieur 2a en calotte sphérique et un bloc supérieur 2b, également en calotte sphérique, complémentaire à la calotte 2a. Le bloc inférieur 2a présente un perçage fileté 3, dans lequel une vis pointeau 4 est introduite jusqu'à venir pénétrer dans un évidement conique 5 prévu sur l'axe 1. Le bloc inférieur 2a est ainsi immobilisé par rapport à l'axe 1.

Le bloc supérieur 2b présente un perçage 6 le traversant de part en part et qui est adapté à recevoir, à chacune de ses extrémités, une douille, respectivement 7a et 7b, dépendant d'une partie de flèche respectivement 8a et 8b. On comprend que, par exemple, la partie 8a se termine par une pointe de flèche et que, par exemple la partie 8b, se termine par une empennage.

La face supérieure du bloc 2a présente un évidement cylindrique 9a adapté à recevoir un aimant permanent annulaire 10a.

En vis-à-vis de l'évidement 9a, le bloc supérieur 2b présente un évidement 9b adapté à recevoir un aimant permanent annulaire 10b. Comme on le voit, les aimants 10a et 10b sont disposés de telle sorte que leurs faces de même polarité soient en vis-à-vis.

L'évidement 9b est plus profond que l'évidement 9a, cela pour permettre d'y loger éventuellement plusieurs aimants annulaires qui, dans ce cas, seront accolés polarité positive contre polarité négative, ou, comme cela est représenté, une bague en Nylon 11 formant entretoise de réglage. En jouant sur l'épaisseur de cette bague 11 et/ou sur le nombre d'aimants 10b, on règle la force qui s'exerce entre l'aimant 10a et l'aimant 10b et par conséquent, l'importance de l'espace 12 maintenu entre le bloc inférieur 2a et le bloc supérieur 2b.

Les blocs inférieur 2a et supérieur 2b présentent l'un et l'autre un passage 13a, 13b pour permettre la traversée par l'axe 1.

On comprend que, lorsque le vent agit sur l'empennage équipant l'extrémité 8b de la flèche, la force est transmise au bloc supérieur 2b du palier magnétique ainsi constitué et que ce bloc 2b tourne autour de l'axe 1 sans friction sur le bloc 2a.

## Revendications

1. Girouette du type comprenant une flèche (8a, 8b) munie d'un empennage et montée rotative autour d'un axe vertical (1) au moyen d'un palier, caractérisée en ce que le palier est magnétique (2a, 2b) et est enfilé sur l'axe vertical (1) et en ce qu'il se compose d'un bloc inférieur (2a) rendu solidaire de l'axe vertical (1) et d'un bloc supérieur (2b), susceptible de tourner librement autour dudit axe, la face supérieure du bloc inférieur (2a) et la face inférieure du bloc supérieur (2b) étant chacune munie d'un aimant permanent (10a, 10b), lesquels aimants (10a, 10b) sont disposés en vis-à-vis et orientés de telle sorte que leurs faces en vis-à-vis sont de même polarité, la flèche (8a, 8b) étant rendue solidaire du bloc supérieur (2b).

2. Girouette selon la revendication 1, caractérisée en ce que la face supérieure du bloc inférieur (2a) présente un premier évidement (9a) adapté à accueillir un premier aimant permanent annulaire (10a) et la face inférieure du bloc supérieur (2b) présente un second évidement (9b) en vis-à-vis dudit premier évidement (9a) et adapté à accueillir un second aimant annulaire permanent (10b), lesdits premier et second aimants (10a, 10b) étant disposés de telle sorte dnas leur évidement respectif (9a, 9b) que leurs faces en vis-à-vis sont de même polarité.

3. Girouette selon la revendication 2, caractérisée en ce que le second évidement (9b) offre une profondeur suffisante pour accueillir un ou plusieurs aimants (10b) accolés polarité positive contre polarité négative et/ou une ou plusieurs bagues (11) formant entretoise(s) de réglage.

4. Girouette selon la revendication 3, caractérisée en ce que la ou les bagues formant entretoise(s) (11) sont en nylon.

5. Girouette selon l'une quelconque des revendications 1 à 4, caractérisée en ce que la flèche est en deux parties (8a, 8b) rendues chacune solidaires du bloc supérieur (2b).

6. Girouette selon l'une quelconque des revendications 1 à 5, caractérisée en ce que le bloc inférieur (2a) et le bloc supérieur (2b) ont une forme extérieure complémentaire donnant au palier magnétique qu'ils constituent une forme sphérique.

**Patentansprüche**

1. Wetterfahne, enthaltend einen Zeiger (8a, 8b), der mit einem Leitwerk versehen und um eine vertikale Achse (1) mittels eines Lagers drehbar gelagert ist, dadurch gekennzeichnet, daß das Lager (2a, 2b) magnetisch ist und auf die vertikale Achse (1) aufgesteckt ist, und daß es aus einem unteren Block (2a), der fest mit der vertikalen Achse (1) verbunden ist, und einem oberen Block (2b) besteht, der um die genannte Achse frei drehen kann, wobei die Oberseite des unteren Blocks (2a) und die Unterseite des oberen Blocks (2b) jeweils mit einem Permanentmagneten (10a, 10b) versehen ist, wobei die genannten Magneten (10a, 10b) einander gegenüberstehen und derart ausgerichtet sind, daß ihre einander gegenüberstehenden Seiten gleiche Polarität haben, wobei der Zeiger (8a, 8b) mit dem oberen Block (2b) fest verbunden ist.

2. Wetterfahne nach Anspruch 1, dadurch gekennzeichnet, daß die Oberseite des unteren Blocks (2a) eine erste Ausnehmung (9a) aufweist, die dazu eingerichtet ist, einen ersten ringförmigen Permanentmagneten (10a) aufzunehmen, und die Unterseite des oberen Blocks (2b) eine zweite Ausnehmung (9b) aufweist, die der ersten Ausnehmung (9a) gegenübersteht und dazu eingerichtet ist, einen zweiten ringförmigen Permanentmagneten (10b) aufzunehmen, wobei die ersten und zweiten Magneten (10a, 10b) derart in ihren jeweiligen Ausnehmungen (9a, 9b) angeordnet sind, daß ihre einander gegenüberstehenden Seiten gleiche Polarität aufweisen.

3. Wetterfahne nach Anspruch 2, dadurch gekennzeichnet, daß die zweite Ausnehmung (9b) eine ausreichende Tiefe aufweist, um einen oder mehrere Magnete (10b) aufzunehmen, die Nordpol an Südpol zusammengesetzt sind, und/oder eine oder mehrere Stäbe (11), die Einstellstück(e) bilden.

4. Wetterfahne nach Anspruch 3, dadurch gekennzeichnet, daß der oder die Stäbe, die Einstellstück(e) (11) bilden, aus Nylon bestehen.

5. Wetterfahne nach einem der Ansprüche 1 bis 4, dadurch gekennzeichnet, daß der Zeiger aus zwei Teilen (8a, 8b) besteht, die jeweils mit dem oberen Block (2b) fest verbunden sind.

6. Wetterfahne nach einem der Ansprüche 1 bis 5, dadurch gekennzeichnet, daß der untere Block (2a) und obere Block (2b) komplementäre Außenform aufweisen, die dem magnetischen Lager, das sie bilden, eine kugelige Gestalt gibt.

**Claims**

1. A weathervane comprising a pointer (8a, 8b) provided with a vane and mounted for rotation around a vertical shaft (1) by means of a bearing characterized in that the bearing (2a, 2b) is magnetic and is mounted on the vertical shaft (1a) and in that it includes a lower block (2a) mounted fixedly on the vertical shaft (1) and an upper block (2b) connected for free rotation around said shaft, the upper surface of the lower block (2a) and the lower surface of the upper block (2b) each being provided with a permanent magnet (10a, 10b), said magnets (10a, 10b) being placed opposite one another and oriented so that their surfaces which are face-to-face are of the same polarity, the pointer (8a, 8b) being connected to the upper block (2b).

2. A weathervane according to claim 1, characterized in that the upper surface of the lower block (2a) has a first recess (9a) formed therein and adapted to receive a first permanent ring-shaped magnet (10a) and the lower surface of the upper block (2b) has a second recess (9b) formed therein, opposite the said first recess (9a) and adapted to receive a second permanent ring-shaped magnet (10b), said first and second magnets (10a, 10b) being placed in their respective recesses (9a, 9b) so that their surfaces face-to-face are of the same polarity.

3. A weathervane according to claim 2, characterized in that the second recess (9b) is of sufficient depth to receive one or more magnets (10b) stacked therein in positive polarity against negative polarity orientation, and/or one or more rings (11) forming adjustment spacers.

4. A weathervane according to claim 3, characterized in that the ring(s) (11) which form the spacers are made of Nylon.

5. A weathervane according to any one of claims 1 to 4, characterized in that the pointer (8a, 8b) is in two parts, both mounted fixedly to the upper block (2b).

6. A weathervane according to any one of claims 1 to 5, characterized in that the lower block (2a) and the upper block (2b) have a complementary exterior form giving a spherical form to the magnetic bearing which they constitute.